Europäisches Patentamt

European Patent Office

Office européen des brevets

(11) Publication number : **0 470 824 A1**

## EUROPEAN PATENT APPLICATION

(21) Application number : **91307251.8**

(51) Int. Cl.⁵ : **H01B 13/06, B29C 35/10**

(22) Date of filing : **07.08.91**

(30) Priority : **09.08.90 JP 209139/90**

(43) Date of publication of application :
**12.02.92 Bulletin 92/07**

(84) Designated Contracting States :
**DE FR IT**

(71) Applicant : **MITSUBA MANUFACTURING CO.,
LTD.
5-1-1 Koyama, Shinagawa-ku
Tokyo (JP)**

(72) Inventor : **Horiuchi, Shozo
6285-1 Ooaza Soehi, Sanadamachi
Chiisagata-gun, Nagano-ken (JP)**

(74) Representative : **Daley, Michael John et al
F.J. CLEVELAND & COMPANY 40/43 Chancery
Lane
London, WC2A 1JQ (GB)**

(54) Method and apparatus for producing rubber coated electric wire.

(57)    A method of producing rubber coated electric wire 16 in which an electrically conductive wire core 2 is extrusion-coated with unvulcanized rubber, the result is extrusion coated with a heat-resistant resin, the resulting rubber and resin coated wire core is cooled for solidifying the resin coating, the rubber coating is vulcanized by heating it to and maintaining it at its vulcanization temperature, and the resin coating 8a is peeled off from the vulcanized rubber coating.

EP 0 470 824 A1

FIG.3

This invention relates to a method of producing a rubber coated electric wire and an apparatus for conducting the method.

Conventional methods for the production of rubber coated electric wire are of two types.

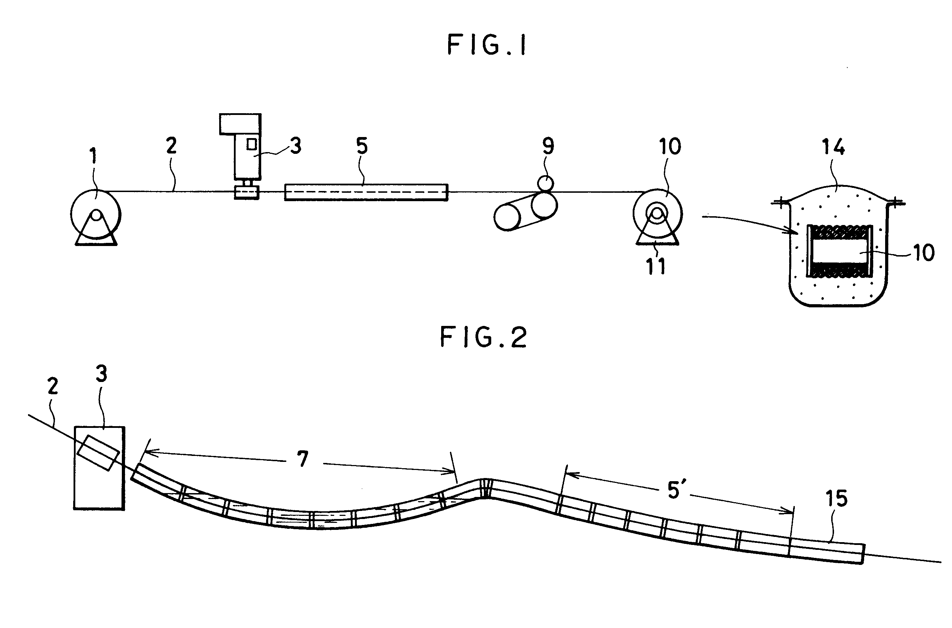

The first is the batch method, an example of which is illustrated in Figure 1. In this method, an electrically conductive wire core 2 paid out from a reel 1 is coated with extruded unvulcanized rubber in an extruder 3, the rubber coated wire core 2 is cooled in a cooling water tank 5, and the result is drawn out by traction rolls 9 to be wound on a reel 10 by a winder 11. After a prescribed length of the coated wire has been wound on the reel 10, the reel is placed in a steam oven 14 where it is held at the vulcanization temperature of the rubber coating for a prescribed period of time, thereby vulcanizing the rubber coating to impart it with the desired degree of elasticity and thus obtaining a rubber coated electric wire as a final product.

In methods of the second type, the rubber is continuously vulcanized on a conveyor line. Specifically, as shown in Figure 2, a wire core 2 that has been extrusion-coated with unvulcanized rubber in an extruder 3 is passed through a vulcanizer 7 consisting of a number of flexibly joined vulcanization pipes so as to continuously vulcanize the rubber coating. The result is cooled in a cooling system 5' and then passed through a seal box 15 to be wound into a product coil of rubber coated electric wire by a winder (not shown).

In the first-mentioned batch method involving vulcanization in the steam oven 14, the wire core is taken up and wound on the reel while the rubber coating is still in a soft, unvulcanized state. As a result, the rubber coating is liable to suffer surface scratching and/or to be crushed to the extent of permanently altering its sectional configuration. The problem of deformation of the sectional profile is particularly pronounced in the case where the core consists of two or more wires twisted together.

The second continuous vulcanizing method uses either steam or a liquid heat medium as the source of the vulcanizing heat.

Where steam is used, special measures must be taken for maintaining the steam pressure in the vulcanizer 7 constant. Moreover, the extreme softness of the rubber coating during the vulcanization reaction makes it necessary to maintain the entire vulcanization line in the shape of a catenary so as to ensure that the rubber coating does not come in contact with the vulcanization pipes. This requires careful control of the speed at which the wire core 2 is taken up.

Troublesome operations are also required in the case where a liquid heat medium is used. Specifically, it is necessary to maintain the opposite ends of the vulcanization line 7 at a higher level than the surface of the liquid medium, to replace the liquid medium carried away on the surface of the rubber coating, and to recover the liquid medium released into the cooling water of the cooling system 5'.

The object of this invention is to provide a method and an apparatus for efficiently producing rubber coated electric wire exhibiting a desirable degree of elasticity.

Another object of the present invention is to provide such a method and apparatus wherein the rubber coated electric wire is produced by applying an unvulcanized rubber coating to a wire core and then vulcanizing the rubber coating in a manner that avoids the occurrence of surface scratching and sectional deformation.

For realizing these objects, the present invention provides a method of producing rubber coated electric wire by extrusion-coating an electrically conductive wire core with unvulcanized rubber and vulcanizing the rubber coating of the coated wire core by heating the rubber coating to and maintaining it at its vulcanization temperature, characterised in that the rubber coated wire core is extrusion-coated with a heat-resistant resin and the resin coating is cooled to solidify before the vulcanizing step and that the resin coating is peeled from the coated wire core after the vulcanizing step.

The invention further provides an apparatus for producing rubber coated electric wire, including a rubber extruder for extrusion-coating an electrically conductive wire core with unvulcanized rubber and vulcanization treatment means for heating the rubber coating to its vulcanization temperature, said apparatus characterised in that it further includes a resin extruder for extrusion coating the rubber coated wire core with a heat-resistant resin, cooling means for cooling and solidifying the resin coating of the rubber and resin coated wire core, and means for peeling off the resin coating and that said vulcanization treatment means is used for heating the rubber coating within the solidified resin coating to the vulcanization temperature of the rubber coating.

Thus in accordance with the invention, a heat-resistant resin coating is formed on the exterior of the unvulcanized rubber coating of the wire core and then, after only this resin coating has been solidified, the rubber coating is vulcanized. As a result, the rubber coating is protected from scratching during the take-up operation by the outer resin coating. In addition, at the time the rubber coating is soft during the vulcanization reaction, it is maintained in a constricted (radially squeezed) state by the solidified resin coating. Therefore, no deformation occurs and the vulcanization of the rubber coating can be carried out with high efficiency.

The above and other features of the present invention will become apparent from the following description made with reference to the accompanying drawings, in which:

Figure 1 is a schematic view illustrating an example of a conventional apparatus for producing rubber coated electric wire.

Figure 2 is a schematic view illustrating another example of a conventional apparatus for producing rubber coated electric wire.

Figure 3 is a schematic view illustrating an embodiment of the apparatus for producing rubber coated electric wire according to the invention.

Figure 4 is a schematic view illustrating another embodiment of the apparatus for producing rubber coated electric wire according to the invention.

Figure 5 is a cross-sectional view of an electric wire produced by the method of the invention.

Figure 6 is a schematic view, partially cut away, of a shear heater for heating rubber to be used for coating a wire core.

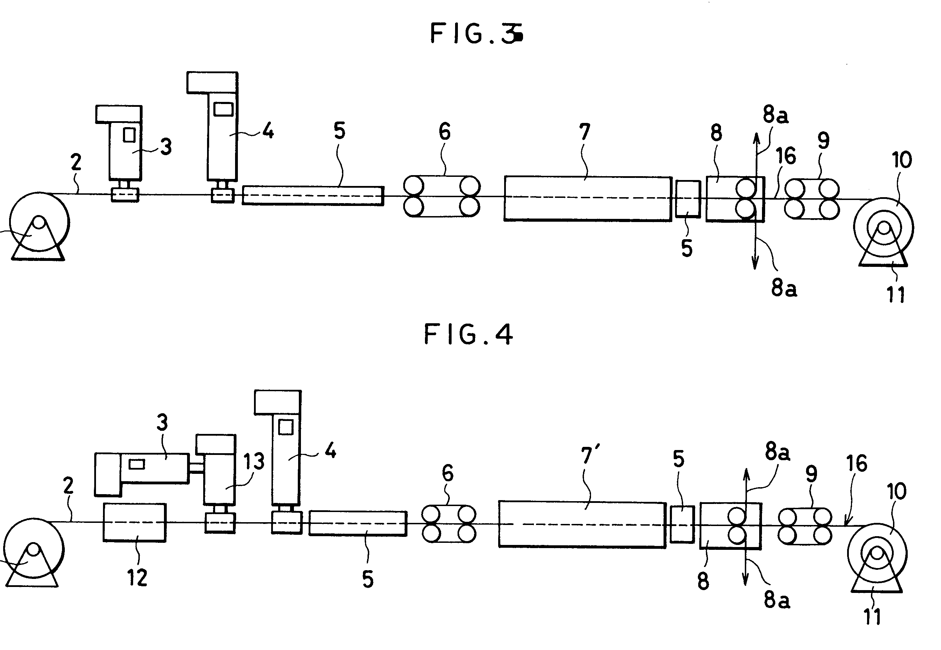

Figure 3 shows an apparatus for producing rubber coated electric wire in accordance with the invention. Electrically conductive wire core 2 paid out from a payout reel 1 is passed through a rubber extruder 3 which coats its entire surface with unvulcanized rubber and then through a resin extruder 4 which coats the entire surface of the unvulcanized rubber coating with resin.

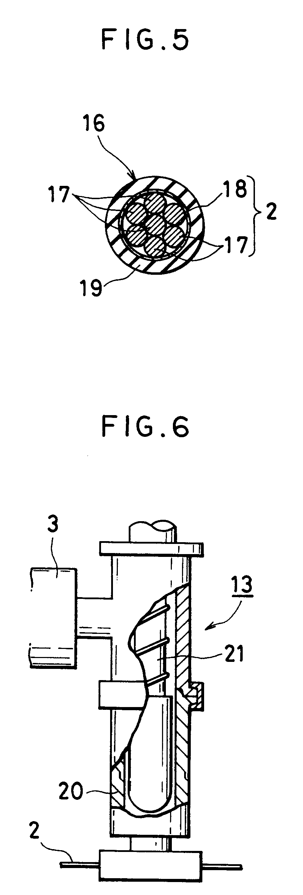

In the example illustrated in Figure 5, the wire core 2 consists of 7 strands of conductor wire 17 bundled together by a binding tape 18, the periphery of the resulting composite core being coated with rubber 19 to form a rubber coated electric wire 16.

The rubber extruder 3 may be of conventional type in which the wire core 2 is passed through dice fed with unvulcanized rubber for uniformly coating the exterior of the wire core 2. The resin extruder 4 is for applying a uniform resin coating on the exterior of the rubber coating and can also be of the conventional type. The wire core coated with rubber and resin in this manner is forwarded to a cooling system 5 which may be constituted using a water tank or the like. After being cooled to have its resin coating solidified in the cooling system 5, the rubber and resin coated wire core is passed between the tracks of a track-type traction mechanism 6 which forwards it to a vulcanizer 7.

The vulcanizer 7 in the present embodiment is equipped with a plurality of high-frequency heating elements for heating the unvulcanized rubber to its vulcanization temperature. The high frequency radiation emitted by the heating elements passes through the resin and rubber coatings to the wire core 2 and mainly heats the conductor wires 17. As these wires are ordinarily formed of copper wire exhibiting excellent thermal conductivity, the heat resulting from the high-frequency radiation is conducted away in both the upstream and downstream directions. However, since the coefficient of thermal conductivity of the conductor wires decreases with increasing temperature, by using a plurality of high-frequency heating elements for locally and progressively heating the conductors it is possible to achieve heating to temperatures within the rubber vulcanization temperature range of 160 - 200°C. This heat passes into the rubber coating and causes the desired vulcanization reaction therein. The resin coating increases the efficiency of the vulcanization treatment by acting as a heat insulator helping to prevent heat from escaping from the rubber coating. Insofar as the high-frequency heating elements are able to heat the rubber coating to its vulcanization temperature, there is no particular limitation on the positions at which they are installed in the vulcanizer 7. Specifically, they can be installed at prescribed intervals over the full length of the vulcanizer or, alternatively, can be installed only at the upstream half of the vulcanizer, with the downstream half being provided with heat maintaining means capable of preventing the once heated wire core and rubber coating from cooling below the temperature range ensuring thorough vulcanization. As about three minutes is required for vulcanization of the rubber, the coated wire core is kept resident in the vulcanizer for this period.

When vulcanization of the rubber material coating the wire core has been completed, the coated wire core is again cooled in the cooling system 5 and then sent to a resin peeler 8. At the resin peeler 8, only the outermost resin shell is progressively slit longitudinally and peeled from the rubber coating. The peeled resin strips are designated by the reference symbol 8a in Figure 1. The electric wire 16 remaining after removal of the resin coating is drawn by a traction mechanism 9 and wound on drum 10 by a winder 11.

As the heat-resistant resin for the resin coating there can be used nylon 6, polyacetal or the like. The resin coating is applied to the surface of the rubber coating to a thickness of 1.0 - 3.0 mm. Use of polymethyl pentene or other such resin having high crystallinity and exhibiting low dielectric loss makes it possible to use microwave heating elements as the aforesaid heating elements. Specifically, instead of being provided with the aforesaid high-frequency heating elements, the vulcanizer 7 is provided with a plurality of microwave heating elements appropriately spaced for avoiding abnormal local temperature elevation. In this case, both the wire core and the rubber coating of the rubber coated wire core 2 fed to the vulcanizer 7 are simultaneously heated by the microwaves from the microwave heating elements. As a result, the time required for vulcanization is shortened since, since differently from the case described above, no time is wasted waiting for heat to pass into the rubber coating from the wire core. Where the vulcanization temperature is in the neighborhood of 200°C, for example, vulcanization is completed in about 2 minutes.

Another embodiment of the apparatus for producing rubber coated electric wire according to the invention is illustrated in Figure 2. An electrically conductive wire core 2 paid out from a pay-out reel 1 is forwarded to a preheater 12 equipped with electric or induction heating means for heating the wire core 2 to a temperature appropriate for vulcanization of the rubber coating to be applied thereto. After the wire core 2 has been heated to this temperature (e.g. 200°C), it is fed to a rubber extruder 3 equipped at one end with a shear heater 13. As will be understood from the structural illustration in Figure 6, the shear heater 13 produces shear heat by the rotation of a mandrel 21 in a cylinder 20 charged with unvulcanized rubber material. The temperature to which the material is heated by the shear heater can be controlled by controlling the diameter and/or the rotational speed of the mandrel 21. The unvulcanized rubber extruded by the rubber extruder 3 is heated in the shear heater 13 to the optimum temperature for its vulcanization treatment and is then applied as a uniform coating to the exterior of the preheated wire core 2. The rubber coated wire core 2 heated to the optimum temperature for vulcanization treatment in this way is then forwarded to the next processing step in which it is coated with a heat-resistant resin by a resin extruder 4, whereafter it is sent to a cooling system 5 to have its resin coating cooled to a temperature of 80 - 150°C. As a result, the resin coating solidifies. It thus both radially constricts the rubber coating and protects its surface. While the aforesaid cooling also slightly cools the outer surface of the rubber layer in contact with the resin, it does not result in a substantial reduction in the temperature of rubber coating, which, like the wire core 2, has been heated to a rubber vulcanization temperature in the range of 160 - 200°C. This is because the heat lost by the rubber coating during the cooling is made up for by heat supplied to it from the wire core and also because the resin is poor in thermal conductivity. The rubber coated wire core 2 with the solidified resin coating is drawn by a traction mechanism 6 and fed to a vulcanizer 7'.

Thus, even though the temperature of the resin coating of the rubber coated wire core fed to the vulcanizer 7' has fallen to 80 - 150°C, the temperature of the rubber coating within the resin coating either remains unchanged or falls only slightly. As the rubber coating therefore does not require positive heating, the vulcanizer 7' is constituted only of heat insulating material and auxiliary heating means as required for maintaining its internal temperature at 160 - 200°C. The rubber coated wire core 2 supplied to the vulcanizer 7' is thus maintained at the optimum temperature for vulcanization and, as a result, the rubber coating thereof is effectively vulcanized and imparted with the desired degree of elasticity during passage through the vulcanizer.

The rubber coated wire core 2 is then fed to the resin peeler 8 where only the resin coating thereof is slit and peeled off to obtain a product rubber coated electric wire 16 that is wound on the drum 10 by the winder 11.

In conventional methods for producing rubber coated electric wire, the high thermal conductivity of the wire core complicates the task of vulcanizing the rubber coating since the wire core carries off the heat required for vulcanization. In contrast, this invention takes advantage of the high thermal conductivity of the wire core to use it as a heat transfer medium. Specifically, after the wire core has been coated with unvulcanized rubber and the rubber coating has in turn been coated with resin, either the wire core only is heated by high frequency radiation and the resulting heat is transferred to the rubber coating to raise it to the vulcanization temperature or both the wire core and rubber coating are simultaneously heated to the vulcanization temperature using microwaves. In either case, the resin coating helps to prevent the escape of heat to the exterior, thus ensuring even heating and effective vulcanization of the rubber. Moreover, since the resin coating is solidified before the rubber vulcanization treatment is conducted, it protects the rubber coating from deformation during vulcanization and prevents its surface from being scratched or soiled by the traction applied thereto. Handling is thus greatly simplified.

In accordance with another aspect of the invention, rubber heated to its vulcanization temperature is used to coat a wire core preheated to the vulcanization temperature and the resin coating is applied to the result. In this case, vulcanization reaction has already started inside the rubber coating prior to its reaching the vulcanizer. Therefore, since the rubber coating can be maintained at the vulcanization temperature for a prescribed period of time by heat received from the wire core, the vulcanizer need only provide auxiliary heating. The invention therefore ensures highly efficient and economical production of high quality rubber coated electric wire.

## Claims

1. A method of producing rubber coated electric wire 16 by extrusion-coating an electrically conductive wire core 2 with unvulcanized rubber and vulcanizing the rubber coating of the coated wire core by heating the rubber coating to and maintaining it at its vulcanization temperature, characterised in that the rubber coated wire core is extrusion-coated with a heat-resistant resin and the resin coating is cooled to solidify before the vulcanizing step and that the resin coating 8a is peeled from the coated wire core after the vulcanizing step.

2. A method according to claim 1 characterised in that the rubber coating is heated to its vulcanization temperature by heating the wire core with high frequency radiation and allowing the heat of the wire core to pass into the rubber coating.

3.  A method according to claim 1 characterised in that the rubber coating is heated to its vulcanization temperature by heating both the wire core and the rubber coating with microwaves.

4.  A method according to claim 1 characterised in that the steps of preheating the electric wire core to a temperature in the vicinity of the vulcanization temperature of the rubber with which it is to be coated and heating the unvulcanized rubber to a temperature in the vicinity of its vulcanization temperature are taken before extrusion coating the wire core therewith.

5.  A method according to claim 1 characterised in that the heat-resistant resin is polymethyl pentene.

6.  A method according to claim 3 characterised in that the heat-resistant resin is polymethyl pentene.

7.  An apparatus for producing rubber coated electric wire, including a rubber extruder for extrusion-coating an electrically conductive wire core with unvulcanized rubber and vulcanization treatment means for heating the rubber coating to its vulcanization temperature, said apparatus characterised in that it further includes a resin extruder for extrusion coating the rubber coated wire core with a heat-resistant resin, cooling means for cooling and solidifying the resin coating of the rubber and resin coated wire core, and means for peeling off the resin coating and that said vulcanization treatment means is used for heating the rubber coating within the solidified resin coating to the vulcanization temperature of the rubber coating.

8.  An apparatus according to claim 7 characterised in that the vulcanization treatment means is a plurality of high-frequency heating elements.

9.  An apparatus according to claim 7 characterised in that the vulcanization treatment means is a plurality of microwave heating elements.

10. An apparatus according to claim 7 characterised in that the rubber extruder is an extruder equipped with a shear heater which heats the unvulcanized rubber to be extruded onto the wire core to a temperature in the vicinity of its vulcanization temperature.

11. An apparatus according to claim 7 characterised in that it further includes traction mechanisms which are disposed upstream of the cooling means and the peeling means for drawing the coated wire core.

12. An apparatus according to claim 7 characterised in that it further includes a wire core preheating means for paying out an electrically conductive wire core preheated to about a vulcanization temperature of a rubber with which it is to be coated and that the rubber extruder is an extruder equipped with a shear heater for extrusion-coating the preheated wire core with unvulcanized rubber heated to a temperature in the vicinity of its vulcanization temperature.

# FIG.1

# FIG.2

EP 0 470 824 A1

# FIG. 3

# FIG. 4

EP 0 470 824 A1

# FIG.5

# FIG.6

EP 0 470 824 A1

**European Patent Office**

**EUROPEAN SEARCH REPORT**

Application Number

| | DOCUMENTS CONSIDERED TO BE RELEVANT | | EP 91307251.8 |
|---|---|---|---|

| Category | Citation of document with indication, where appropriate, of relevant passages | Relevant to claim | CLASSIFICATION OF THE APPLICATION (Int. Cl.5) |
|---|---|---|---|
| Y | DE - B - 1 244 900 (SIEMENS) <br> * Column 1, line 32 - column 2, line 22; column 3, lines 1-6 * | 1-4, 7-12 | H 01 B 13/06 <br> B 29 C 35/10 |
| Y | DE - A1 - 2 715 493 (PARKER) <br> * Page 7, line 8 - page 10, line 20; fig. 2 * | 1,7,11 | |
| Y | DE - A1 - 2 906 173 (SIKORA) <br> * Claim 1; page 8, line 21 - page 9, line 21; fig. * | 2,8 | |
| Y | DE - A1 - 2 926 223 (TROESTER) <br> * Claim 1; page 9, line 26 - page 11, line 13; fig. 1-4 * | 3,9 | |
| Y | DE - A1 - 2 624 820 (SUMITOMO) <br> * Claim 1; page 5, line 13 - page 7, line 20; fig. 2,3 * | 4,10, 12 | **TECHNICAL FIELDS SEARCHED (Int. Cl.5)** <br><br> H 01 B 13/00 <br> B 29 C |
| A | EP - B1 - 0 161 509 (VERITAS) <br> * Column 3, line 15 - column 4, line 2 * | 1 | B 29 D 23/00 |
| A | US - A - 3 883 384 (HOPKINS) <br> * Abstract; column 4, lines 21-43; fig. 1 * | 1 | |

The present search report has been drawn up for all claims

| Place of search | Date of completion of the search | Examiner |
|---|---|---|
| VIENNA | 13-11-1991 | KUTZELNIGG |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)